# EUROPEAN PATENT APPLICATION

(11) **EP 4 588 831 A1**
(43) Date of publication of application: **23.07.2025**
(21) Application number: 24153032.8
(22) Date of filing: 22.01.2024
(51) Int. Cl.: B65G 1/04

(54) **A STORAGE GRID**

(71) Applicant: AUTOSTORE TECHNOLOGY AS, 5578 Nedre Vats (NO)
(72) Inventor: COLLIN, Clément, 5578 Nedre Vats (NO)
(74) Representative: Kilburn & Strode LLP

(57) **Abstract**

The disclosure relates to a storage grid having a support structure that defines a horizontal grid of columns, each column being arranged for the vertical storage of a plurality of storage bins, the storage grid having a bin support moveable between: a deployed position wherein a storage bin can be lowered down one of the columns onto the bin support; and a withdrawn position wherein a storage bin can be lowered down the column past the bin support.

## Description

### TECHNICAL FIELD

The disclosure relates to a storage grid. More particularly, it relates to a storage grid having columns for vertical storage, a robotic vehicle, a method of operating the storage grid, and a computer readable medium.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Stacking bins directly on top of each other may cause wear and tear or more significant damage to the bins. Moreover, in such configurations, the bins must be made of materials strong enough to support the weight of one or more bins stacked thereon, and/or a reinforced design may be implemented to provide strengthened bins. The number of bins being stacked is also limited, as a lowest bin must be able to withstand the weight of all of the bins stacked thereon. This may limit the height of the grid. Moreover, stacking bins directly on top of each other enables reduced airflow between vertically adjacent bins. This can cause challenges in thermal environments, such as for frozen food storage.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5a shows a side view of a storage bin in a column of the system of Fig. 1;
Fig. 5b shows a side view of a storage bin placed in a column of the system of Fig. 1;
Fig. 6 shows an underside view of a storage bin placed in a column of the system of Fig. 1;
Fig. 7a shows a side view of a storage bin being lowered into a column of the system of Fig. 1;
Fig. 7b shows a side view of a storage bin placed into a column of the system of Fig. 1;
Fig. 8a shows a side view of a gripping device of a robotic container-handling vehicle suitable for use in the system of Fig. 1;
Fig. 8b shows an underside view of a gripping device of a robotic container-handling vehicle suitable for use in the system of Fig. 1;
Fig. 9a shows a side view of a bin support in a withdrawn position and in a deployed position, with a gripping device of a robotic container-handling vehicle suitable for use in the system of Fig. 1;
Fig. 9b shows an underside view of a gripping device of a robotic container-handling vehicle suitable for use in the system of Fig. 1;
Fig. 10 shows a side view of a robotic container-handling vehicle with a gripping device, suitable for use in the system of Fig. 1;
Fig. 11 shows a simplified side view of a gripping device of a robotic container-handling vehicle at different stages of engaging with a bin support suitable for use in the system of Fig. 1; and
Fig. 12 shows a flowchart of a method of moving a bin support suitable for use in the system of Fig. 1.

### DETAILED DESCRIPTION

In overview, the disclosure relates to a storage grid for storing goods. The storage grid comprises a support structure that defines a grid of columns, forming an array or lattice structure in which goods may be stored. The columns are arranged for vertical storage of goods. The goods may be stored in storage bins. The storage grid comprises a bin support for supporting a storage bin. The bin support is movable between a deployed position, in which the bin support is positioned to allow a storage bin to be lowered down one of the columns onto the bin support, and a withdrawn position, in which the bin support is positioned to allow a storage bin to be lowered down the column past the bin support. The bin support being in the deployed position enables a storage bin to be stored in a vertical column without applying the weight of the storage bin to a storage bin underneath, and reduces or prevents causing wear or damage to the storage bin(s) below. Moving the bin support between the deployed position and the withdrawn position enables storage bins to be lowered down a column without impediment (e.g. by positioning the bin support in the withdrawn position) and also supporting vertically stored storage bins in a space-efficient manner.

### Automated storage and retrieval system overview

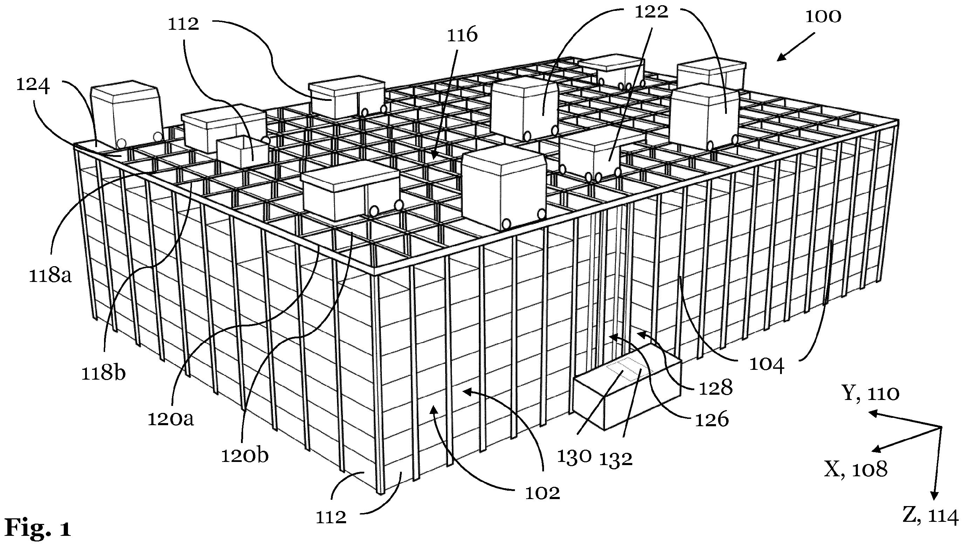

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

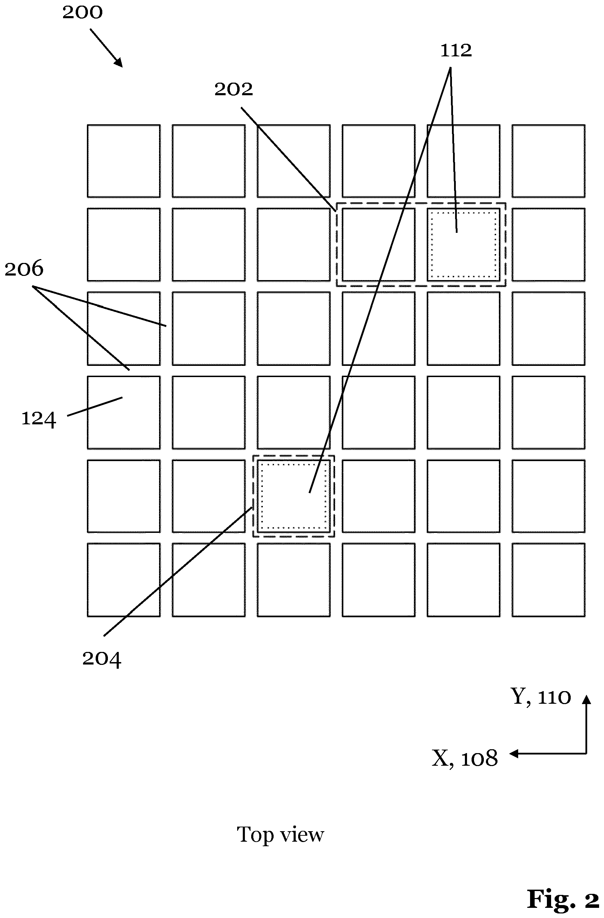

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

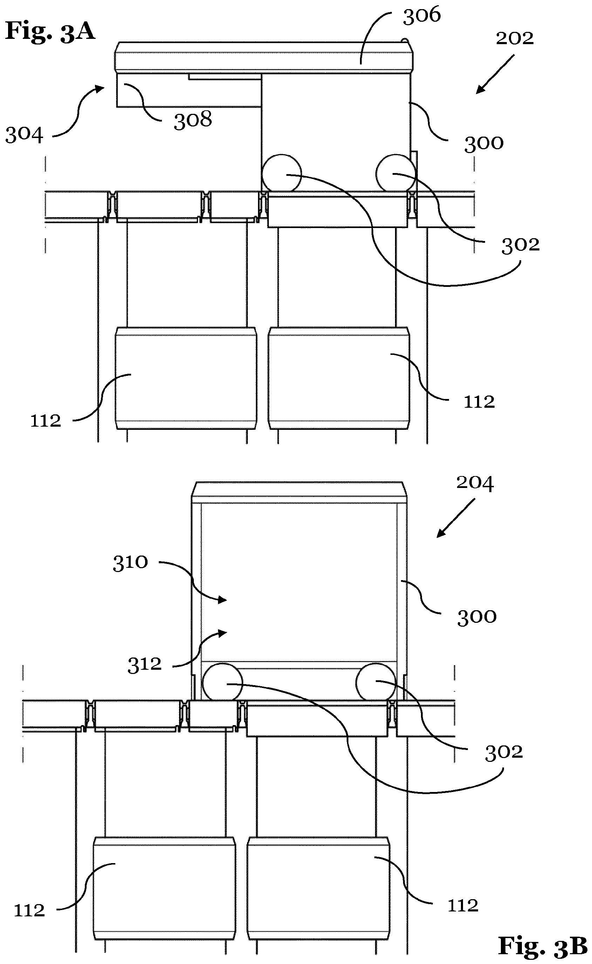

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

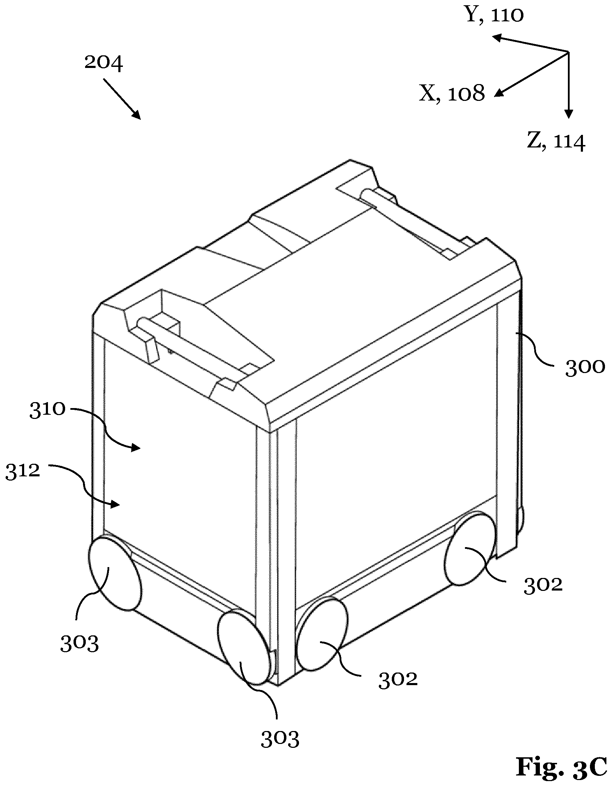

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

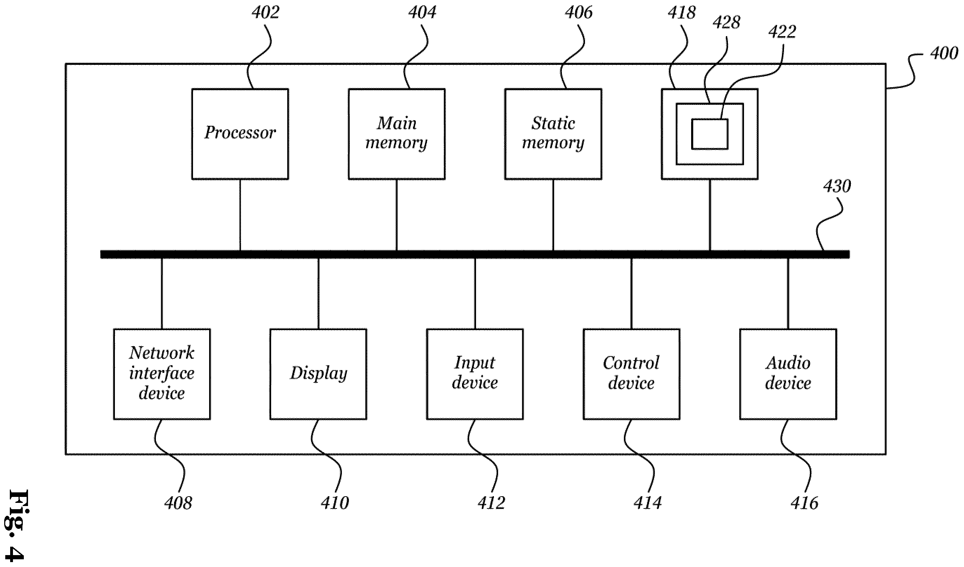

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

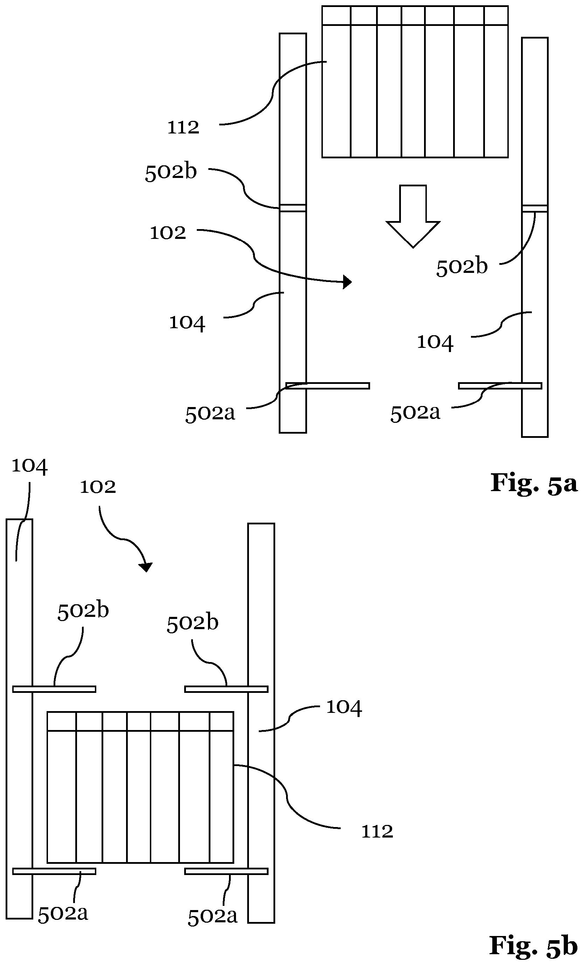

Fig. 5a shows a side view of a storage bin 112 in a column 102 of the grid 100. In Fig. 5a, storage bin 112 is displayed in the process of being lowered down column 102, formed between vertical frame members 104. For the sake of simplicity, the side view is shown in two dimensions. Additionally, a portion of the column 102 is shown. The column 102 may be larger or smaller than depicted, and may be suitable for vertically storing any number of storage bins 112.

A first bin support 502a is shown in a deployed position and a second bin support 502b is illustrated in a withdrawn position. In the deployed position, the first bin support 502a is positioned to protrude from one or more vertical frame members 104 into the column 102 to allow a storage bin 112 to rest thereon. The second bin support 502b is shown in Fig. 5a in the withdrawn position. When a bin support 502 is in a withdrawn position, such as second bin support 502b, the bin support 502 is positioned to allow a storage bin 112 or a gripping device 308 of a robot 202, 204 to move past the bin support 502 unimpeded. That is, when the bin support 502 is in the withdrawn position, storage bin(s) 112 may be lowered or raised through the vertical column 102, and/or the gripping device 308 may be lowered or raised through the vertical column 102, moving past the bin support 502. That is, bin support 502 may be retractable. The bin support 502 may take the form of a pin, a ledge, a protrusion, a support structure or the like.

Once a storage bin 102 is lowered onto first bin support 502a, second bin support 502b may be caused to move from the withdrawn position illustrated in Fig. 5a to the deployed position, as illustrated in Fig. 5b. In some embodiments, the weight of the storage bin 112 on the first bin support 502a may trigger the second bin support 502b to move from the withdrawn position to the deployed position. For example, the first bin support 502a may be mechanically or electronically coupled to the second bin support 502b. The weight of the storage bin 112 on the first bin support 502a may cause the second bin support 502b to move from the withdrawn position to the deployed position. Similarly, release of the weight of storage bin 112 from the first bin support 502a, e.g. if the storage bin 112 is being removed or raised through the vertical column 102, may cause the second bin support 502b to move from the deployed position to the withdrawn position. That is, bin support 502 may be arranged to move from the withdrawn position to the deployed position consequent to the storage bin 112 being lowered past the bin support 502 and onto a trigger mechanism, such as a weight sensor or spring. In some embodiments, a further bin support 502a for supporting a storage bin 112 below the bin support 502b may form part of the trigger mechanism. The further bin support 502a may be moveable between a further deployed position, wherein a storage bin 112 can be lowered down the column 102 onto the further bin support 502a, and a further withdrawn position, wherein a storage bin 112 can be lowered down the column 102 past the further bin support 502a. The bin support 502 may also be arranged to move from the deployed position to the withdrawn position consequent to the storage bin 112 being raised off the trigger mechanism, such as the further bin support 502a.

For example, first bin support 502a may be electronically or mechanically coupled to a weight sensor configured to detect when a storage bin 112 is placed on the first bin support 502a. Upon detection of a storage bin 112 placed on the first bin support 502a by the weight sensor, an electronic, electrical, optical, radio or analogue signal or instructions may be transmitted to the second bin support 502b to trigger the second bin support 502b to move from the withdrawn position to the deployed position. The electronic or analogue signal may be transmitted via a cable, or via a pneumatic system. Similarly, if the weight sensor detects a lifting of the storage bin 112 from the first bin support 502a, the release of the weight of the storage bin 112 may trigger the second bin support 502b to be moved from the deployed to the withdrawn position, in order for the storage bin 112 to be raised through the column 102, past the second bin support 502b. In some embodiments, the bin support 502 may be arranged to move from the withdrawn position to the deployed position consequent to a storage bin 112 being lowered past the bin support 502, and/or the bin support 502 may be arranged to move from the deployed position to the withdrawn position consequent to a storage bin being raised from below the bin support.

In some embodiments, a sensor may be provided on (e.g. attached to or disposed on) a gripping device 308 of a robot 122 (e.g. robot 202 or robot 204). For example, a sensor may be disposed on a portion of the gripping device 308 which is lowered down through the column 102 to lift or place a storage bin 112. The sensor may be arranged to determine a position of the bin support 502 (e.g. withdrawn position or deployed position), for example relative to the position (e.g. location) of the portion of the gripping device 308. The sensor may be used to ensure that any bin supports 502 between a current position of a storage bin 112 and a destination position of the storage bin 112 are in the withdrawn position to allow the storage bin 112 to pass said bin supports 502. In some embodiments, the bin support 502 may be arranged to move from the withdrawn position to the deployed position consequent to a storage bin 112 being lowered past the bin support 502, and/or the bin support 502 may be arranged to move from the deployed position to the withdrawn position consequent to a storage bin being raised from below the bin support.

In some embodiments, the one or more bin supports 502 maybe controlled electronically, for example by a central unit. The bin support(s) 502 may thus be moved between the withdrawn position and the deployed position as necessary. In some embodiments, the bin support 502 may be arranged to receive electrical, optical and/or radio instructions and to move between the withdrawn and deployed positions upon receipt thereof.

In some embodiments, one or more vertical frame members 104 may be electronically coupled to one or more sensors (not shown). The one or more sensors may be used to determine the positions of one or more storage bins 112, which may be used to automatically move the bin support 502 between the deployed position and the withdrawn position as necessary. For example, a bin support 502 above a first storage bin 112 that has been stored in the column 102 may be automatically moved from the withdrawn position to the deployed position in response to the detection of the first storage bin 112 being stored in the vertical column 102, and/or in response to the detection of a further storage bin 112 being lowered down the column 102. In some embodiments, the bin support 502 may be arranged to move from the withdrawn position to the deployed position consequent to a storage bin 112 being lowered past the bin support 502, and/or the bin support 502 may be arranged to move from the deployed position to the withdrawn position consequent to a storage bin being raised from below the bin support.

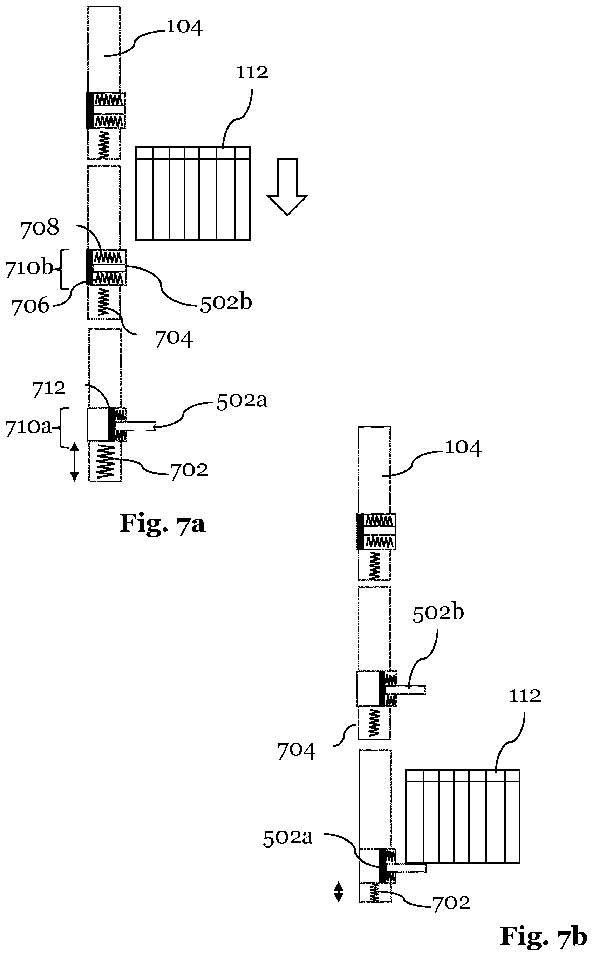

Various embodiments regarding the mechanism for effecting the move of bin support 502 from the withdrawn position to the deployed position will be described in detail with reference to Figs. 7a - 11.

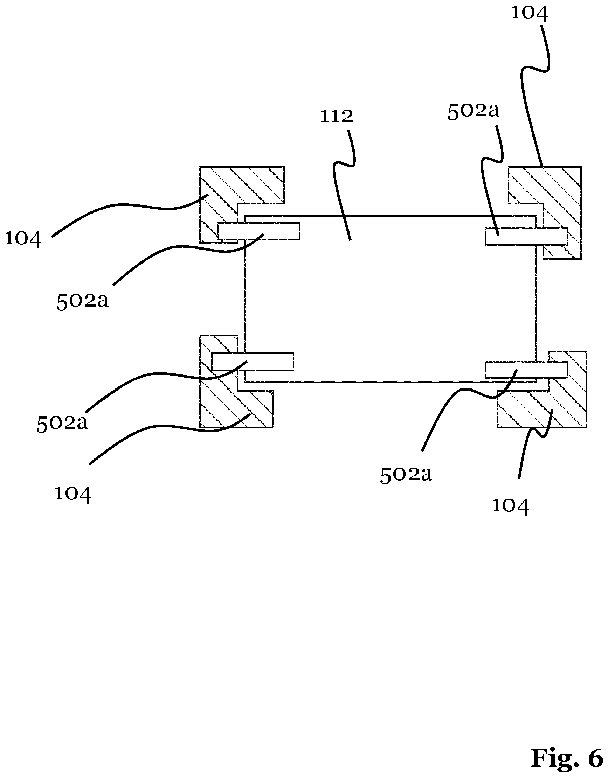

Fig. 6 shows an underside view of a storage bin 112 placed in a column 102 of the grid 100. The storage bin 112 is shown resting on the first bin support 502a of Fig. 5a. Relevant sections of vertical frame members 104 are also shown.

Several embodiments will be described, relating to the mechanism by which bin supports 502 are moved between a withdrawn position and a deployed position. For all such embodiments, the presence of a retractable bin support 502 for supporting a storage bin 112 may enable the storage bins 112 to be made of lighter materials, and may further enable the design of the storage bins 112 may be simplified. For example, reinforcing ribs on the storage bins 112 may be reduced or avoided, thus simplifying the manufacturing process of the storage bins 112, as the weight of any further storage bins 112 stored vertically in the column 102 is borne by bin supports 502. Moreover, the use of bin supports 502 enables air flow between two vertically adjacent storage bins 112, which may enable a more controllable thermal environment, such as in systems for storing frozen food.

Fig. 7a shows a side view of a storage bin 112 being lowered into a column 102 of the system 100 of Fig. 1, and Fig. 7b shows a side view of the storage bin 112 placed into a column 102 of the system 100 of Fig. 1. For the sake of simplicity, a single vertical frame member 104 is shown. It is to be understood that the description provided herein may be applied to any number of vertical frame members 104. It is to be understood that although two bin supports 502a, 502b are referenced herein, there may be any number of bin supports 502. Figs. 7a and 7b describe embodiments in which the bin support 502 is arranged to move between the withdrawn and deployed positions using energy derived from the storage bin 112 being lowered. However, this is nonlimiting - other embodiments for using the energy derived from the storage bin 112 being lowered are also envisaged.

As illustrated in Fig. 7a, storage bin 112 is lowered through column 102. In the embodiment depicted in Figs. 7a and 7b, the bin supports 502a, 502b are actuated mechanically, such as springs 702, 704. For example, the bin supports 502a, 502b may be coupled to the springs 702, 704. Prior to the storage bin 112 being placed on the first bin support 502a, a first spring 702 underneath the first bin support 502a may be in a first state such as a rest state, in which the first spring 702 is not compressed or is only partially compressed. The first spring 702 may be directly beneath the first bin support 502a, or there may be one or more additional components between the first bin support 502a and the first spring 702. As illustrated in Fig. 7b, as the storage bin 112 is lowered onto the first bin support 502a, the first spring 702 is compressed due to the weight of the storage bin 112 on the first bin support 502a. The first bin support 502a may shift downwards in the Z direction 114, compressing the first spring 702, under the weight of the storage bin 112 being placed thereon. In some embodiments, the compression of the first spring 702 may trigger the second bin support 502b to move from the withdrawn position to the deployed position. For example, the first spring 702 may be mechanically or electronically coupled to the second bin support 502b. Compression of the first spring 702 may trigger or cause (e.g. mechanically or electronically) the second bin support 502b to move from the withdrawn position to the deployed position. Decompression, or extension, of the first spring 702 (e.g. caused by a result of the weight compressing the first spring 702 being reduced or removed) may trigger or cause (e.g. mechanically or electronically) the second bin support 502b to move from the deployed position to the withdrawn position, for example to enable the storage bin 112 to be lifted through the column 102.

As seen in Figs. 7a and 7b, the first bin support 502a is mechanically coupled with the second bin support 502b. In some embodiments, the first bin support 502a is connected to the second bin support 502b by means of a cable (not shown) guided by a plurality of pulleys (not shown). This mechanical coupling enables vertical movement of the first spring 702 to result in horizontal movement of the second bin support 502b. The horizontal movement of the second bin support 502b may be effected using, for example, one or more horizontal springs 706, 708.

In the shown sequence (see in particular Fig. 7a), each bin support 502 is mechanically or electronically coupled to a vertical spring (e.g. springs 702, 704). Each bin support 502 may be further coupled (e.g. mechanically or electronically) to a radially extending element (not shown) within the vertical frame member(s) 104, and one or more horizontal springs 706, 708 which may be attached to an inner wall of the vertical frame member 104. Although horizontal springs 706, 708 are depicted coupled to the second bin support 502b, it is to be understood that this is merely exemplary. Each bin support 502 may be similarly coupled to one or more horizontal springs. In some embodiments, a bin support 502 may refer to a bin support unit, comprising the bin support 502, the one or more horizontal springs 706, 708, and a vertically movable component 710. The vertically movable component 710 may comprise a horizontally movable T-shaped element 712 consisting of a bar and a stem. The stem may be the component upon which the storage bin 112 rests upon being lowered onto the bin support 502. As seen, the vertically movable component 710b may be connected to one or more further vertically movable components 710a corresponding to a respective one or more further bin supports 502. More specifically, one or more cables (not shown) coupled to vertical spring 702 of vertically movable component 710b may be communicatively coupled to the bar of the T-shaped element 712 of a further vertically movable component 710a disposed along the vertical frame member 104 vertically above and/or below the vertically movable component 710b.

The stem of the T-shaped element 712 of the vertically movable component 710 may serve as bin support 502. Accordingly, vertical movement of a lower vertically movable component 710, if present, may be, by means of cables and pulleys (not shown). The vertical movement of a lower vertical movable component 710a may be transferred to and converted to horizontal movement of the T-shaped element 712 of the vertically movable component 710b. Horizontal movement of this T-shaped element 712, in turn, may result in retraction or protrusion of the bin support 502 (e.g. second bin support 502b) and extension or compression of the horizontal spring 706, 708. When the stem of the T-shaped element 712 is protruding into the column 102, the bin support 502 may be in the deployed position. The bin support 502 may thus be in a position ready to support a storage bin 112.

In some embodiments, compression or extension of the vertical spring 702, 704 may be a function of movement of the vertically movable component 710. Movement of the vertically movable component 710 may, in turn, be caused by a storage bin 112 being placed on the bin support 502 when the bin support 502 is in the deployed position. In the shown embodiment (see for instance Fig. 7b in conjunction with Fig. 7a), compression of the vertical spring 702 coupled to the vertically movable component 710a may result in compression of the horizontal spring 706, 708 of the vertically movable component 710a. As a result, bin support 502, e.g. the stem of the T-shaped element 712, is moved to the deployed position, and is ready to support a storage bin 112, as illustrated in Fig. 7b.

Accordingly, the presence of a storage bin 112 on the first bin support 502a (e.g. the weight of storage bin 112 on the bin support 502a) may cause the second bin support 502b to move from the withdrawn position to the deployed position. As such, the storage bins 112 are no longer stored in stacked configuration, but rest on bin supports 502. This may enable lighter materials to be used for the storage bins 112, which may simplify production and reduce costs. In some embodiments, simplified storage bin designs may be used, for example by reducing or eliminating the need for reinforcing ribs. Reducing structural complexity of the storage bins 112 may thus simplify the manufacturing process of the storage bins.

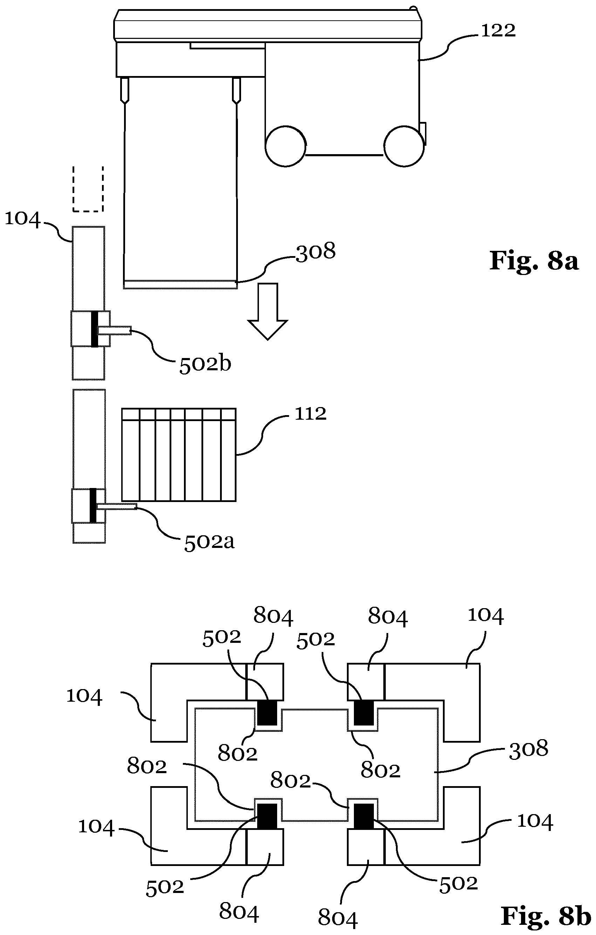

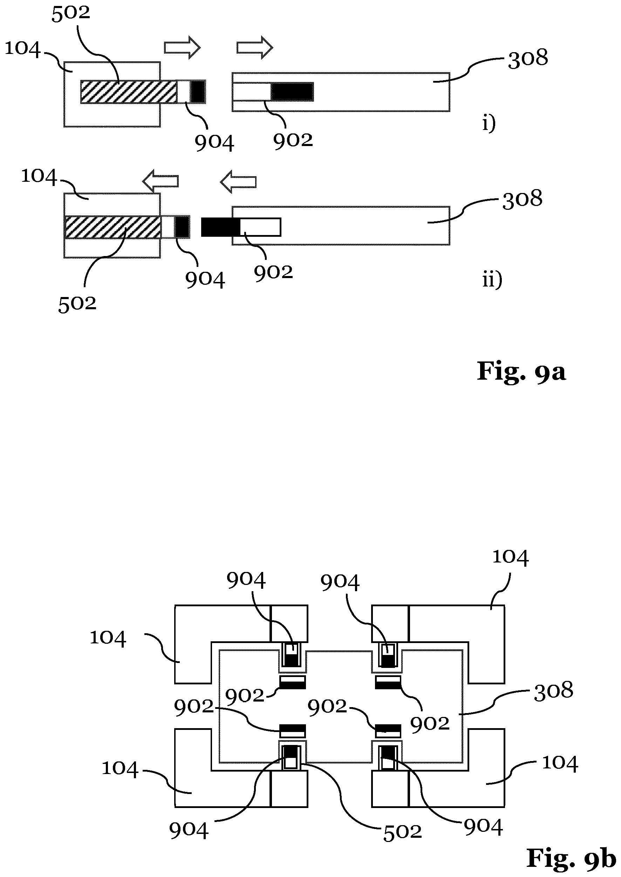

Fig. 8a shows a side view of a gripping device 308 of a robotic container-handling vehicle, or robot, 122, 202, 204 suitable for use in the grid 100. Although Fig. 8a illustrates a cantilever type robot 202, it is to be understood that this is merely exemplary. An internal cavity robot 204 may similarly be used. For the sake of simplicity, reference will be made to robot 122, with the understanding that this may refer to any type of robot, such as a cantilever robot (e.g. robot 202) or an internal cavity robot (e.g. robot 204). Moreover, the depiction of Fig. 8a is simplified - the wheels of robot 122 are arranged to run along rails which are disposed along the top of the grid 100 in x and y directions, as described previously. The top of the grid 100 is not shown in Fig. 8a for the sake of simplicity. As in previous figures, although only one vertical frame member 104 is shown, it is to be understood that other vertical frame members 104 which form column 102 may have a similar construction, function and layout as the vertical frame member 104 depicted.

Robot 122 comprises a gripping device 308, which is configured to be raised or lowered into a vertical column 102 to retrieve or place storage bins 112. As illustrated in Fig. 8a, the gripping device 308 is being lowered down column 102, as indicated by the arrow, towards storage bin 112 which is resting on first bin support 502a.

As illustrated in Fig. 8a, second bin support 502b is in the deployed position, for example due to the presence of storage bin 112 on the first bin support 502a (discussed above). As the second bin support 502b protrudes into the vertical column 102 when in the deployed position, the gripping device 308 is configured to avoid a collision with the second bin support 502b through one of several means.

In some embodiments, gripping device 308 maybe communicatively coupled with one or more sensors (not shown) and likewise each of the bin supports 502 may be communicatively coupled with an electronic control. The one or more sensors communicatively coupled with the gripping device 308 may be arranged to detect a position of the gripping device 308, for example a position within the grid, or proximity to deployed bin supports 502. Upon detecting that the path of the gripping device 308 is interrupted by a bin support such as bin support 502b, an electronic signal may be sent to bin support 502b causing the bin support 502b to move from the deployed position to the withdrawn position, to allow the gripping device 308 to pass second bin support 502b unimpeded. In some embodiments, the gripping device 308 may comprise indentations, flaps or gaps in its profile which are arranged to allow the gripping device 308 to pass the deployed bin support 502b without coming into contact with the deployed bin support 502b. Such an arrangement is depicted in Fig. 8b.

Fig. 8b shows an underside view of a gripping device 308 of a robotic container-handling vehicle 122 suitable for use in grid 100. The gripping device 308 is shown within column 102 formed by four vertical frame members 104. In the depiction of Fig. 8b, the bin support 502 is shown in the deployed position, e.g. protruding into the vertical column 102. The gripping device 308 may comprise one or more cut out portions 802 arranged to enable the gripping device 308 to be lowered or raised through column 102 past the bin support 502 when the bin support 502 is in the deployed position. That is, the cut out portions 802, also referred to as gaps or indentations, are arranged to align with the position of bin support 502 within the column 102 when the bin support 502 is in the deployed position.

In some embodiments, the bin support 502 may be disposed on a module 804 configured to be attached to each vertical frame member 104. In this way, bin support 502 may be retrofitted to vertical frame members 104 of a grid 100. Moreover, the use of a module 804 with the bin support 502 may enable the bin support 502 to be disposed at a further distance from a corner of each vertical frame member 104, allowing more space for any mechanical or electronic components such as cables, pulleys, gears, pneumatics, and the like.

Figs. 9a - 11 depict embodiments in which the bin support 502 is arranged to move between the withdrawn and deployed positions upon mechanical interaction between the bin support 502 and the gripping device 308 of a robot 122 (e.g. robot 202, 204) which has been lowered down column 102. Figs. 9a and 9b illustrate embodiments in which a magnetic interaction between the gripping device 308 and a bin support 502 is used to move to the bin support 502 between the withdrawn position and the deployed position.

Fig. 9a shows a side view of a bin support 502 in a withdrawn position and in a deployed position, with a gripping device 308 of a robotic container-handling vehicle 112 suitable for use in grid 100.

Figs. 9a and 9b describe embodiments in which magnets are used to effect the movement of the bin support 502 between the withdrawn position and the deployed position. An electromagnet 902 may be disposed on or in gripping device 308. The electromagnet 902 may be retractable. The electromagnet 902 may be arranged to be extendable in a direction towards a bin support 502.

The electromagnet 902 may be electronically connected to a power source (not shown) and coupled to a control unit (not shown). For example, the power source may be coupled to a control unit, the control unit being configured to control the polarity of the electromagnet 902. In some embodiments, the power source may be disposed in the robot 112, for example housed within or on the body of the robot 112, within or on the lifting device, or within or on the gripping device 308.

A magnet 904 may be disposed on the bin support 502. For example, the magnet 904 may be disposed on a protruding end of the bin support 502; that is, an end of the bin support 502 that is arranged to protrude into the column 102 when the bin support 502 is in the deployed position. The magnet 904 maybe a permanent magnet.

Fig. 9a (i) illustrates the bin support 502 being moved from the withdrawn position to the deployed position. The polarity of the electromagnet 902 is selected to attract the magnet 904 of the bin support 502. As the gripping device 308 approaches the bin support 502 (e.g. from above or below), the bin support 502 may thus be moved into the deployed position from a retracted withdrawn position through magnetic attraction. In some embodiments, the electromagnet 902 of the gripping device 308 may be used to move a bin support 502 from the withdrawn position to the deployed position, after placing a storage bin 112 on a lower bin support 502; for example, upon releasing the storage bin 112, during the raising of the gripping device 308 and whilst passing a bin support 502 above the placed storage bin 112. In this way, the bin support 502 above the placed storage bin 112 may be ready to support a further storage bin 112.

Fig. 9a (ii) illustrates the bin support 502 being moved from the deployed position to the withdrawn position. The polarity of the electromagnet 902 is selected to repel the magnet 904 of the bin support 502. As the gripping device 308 approaches the bin support 502 (e.g. from above or below), the bin support 502 may thus be moved into the withdrawn position from the deployed position through magnetic repulsion. In some embodiments, the electromagnet 902 of the gripping device 308 may be used to move a bin support 502 from the deployed position to the withdrawn position, when retrieving a storage bin 112 that had previously been placed on a lower bin support 502; for example, upon lowering the gripping device 308 into column 102 to retrieve a storage bin 112. In this way, the bin support 502 above the storage bin 112 being retrieved may be withdrawn from the vertical column 102 in order to enable the retrieved storage bin 112 to pass the bin support 502 and thus enable the storage bin 112 to be lifted through the vertical column 102 without colliding with a bin support 502.

In some embodiments, the polarity of the electromagnet 902 may be determined based on the current activity of the robot 122. For example, if a robot 122 is tasked with retrieving a storage bin 112, the polarity of the electromagnet 902 may be set to repel the permanent magnet(s) 904 of any bin supports 502 vertically between the top of the grid 100 and the position of the storage bin 112. As a further example, if a robot 122 is tasked with placing a storage bin 112, the polarity of the electromagnet 902 may be controlled to switch from a repelling mode to an attracting mode upon release of the storage bin 112, in order to move the bin support 502 immediately above the placed storage bin 112 from the withdrawn position to the deployed position, in preparation of the placement of a further storage bin 112. The repelling mode may refer to a polarity setting of the electromagnet 902 in which the polarity of the electromagnet 902 matches the polarity of the permanent magnet 904 (e.g. both north poles, or both south poles). The attracting mode may refer to a polarity setting of the electromagnet 902 in which the polarity of the electromagnet 902 is the opposite of the polarity of the permanent magnet 904.

In some embodiments, in the repelling mode, the electromagnet 902 may be configured to move laterally towards the bin support 502 in order to move the bin support 502 from the deployed position to the withdrawn position.

In some embodiments, in the attracting mode, the electromagnet 902 may be configured to move laterally away from the bin support 502 in order to move the bin support 502 from a retracted withdrawn position.

The embodiments described with reference to Figs. 9a and 9b are compatible with the disclosure of Figs. 8a and 8b.

Fig. 9b shows an underside view of a gripping device 308 of a robotic container-handling vehicle 112 suitable for use in the grid 100.

As described with reference to Fig. 8b above, the gripping device 308 is illustrated within column 102 formed by four vertical frame members 104. The gripping device 308 may comprise one or more cut-out portions as described in Fig. 8b. The gripping device 308 may be provided with one or more electromagnets 902, arranged at a position to attract or repel a bin support 502 when the gripping device 308 is being raised or lowered through vertical column 102. For example, the one or more electromagnets 902 may be provided at an inner edge of a cut-out portion, as illustrated in Fig. 9b.

Also depicted in Fig. 9b, the bin support 502 (labelled only once in the figure for simplicity and clarity) may comprise one or more permanent magnets 904. As in Fig. 8b and the associated description, the bin support 502 may be disposed on a module 804 which may be a part of the vertical frame member 104 or an attachable component suitable for being retrofitted to a vertical frame member 104.

Electronic components for providing power to the one or more electromagnets 904 may be disposed on or in the gripping device 308, or on or in the robot 122. An electrical cable may be provided as a component of, or along, one or more cables or bands used to raise or lower the gripping device 308.

Although Figs. 9a and 9b have described embodiments in which a permanent magnet is disposed on the bin support 502 and an electromagnet is disposed on the gripping device 308, it is to be understood that the reverse arrangement is also possible. That is, the gripping device 308 may be provided with a permanent magnet, and the bin support 502 may be provided with an electromagnet whose polarity may be controlled via a control unit.

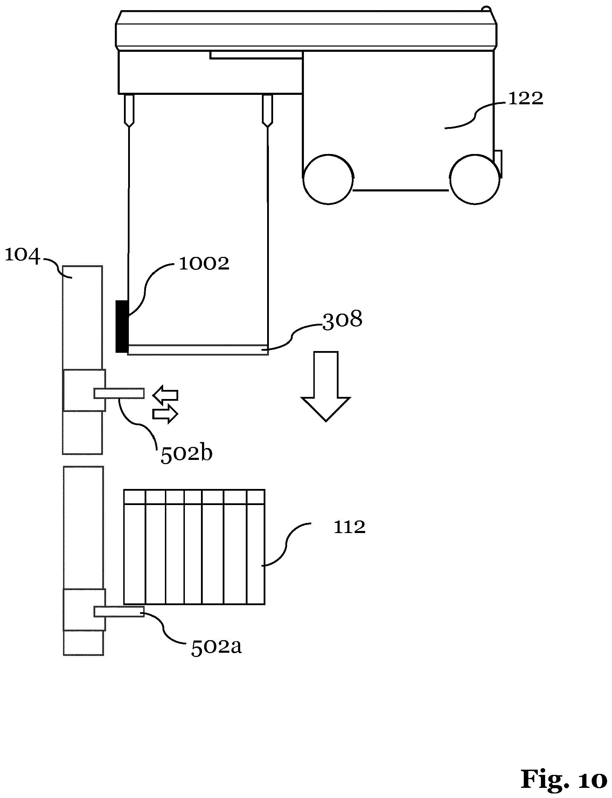

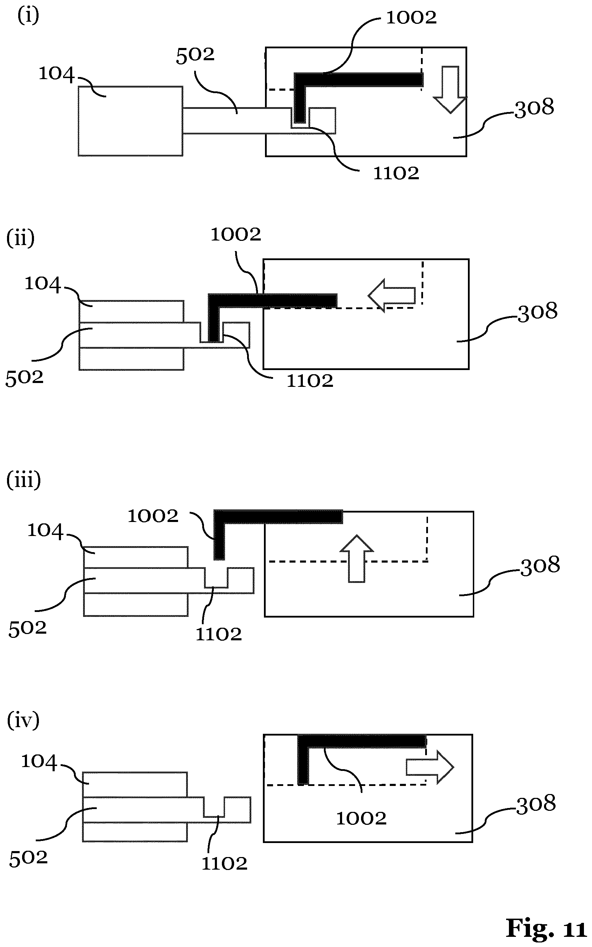

Fig. 10 shows a side view of a robotic container-handling vehicle 122 with a gripping device 308, suitable for use in grid 100, and Fig. 11 shows a simplified side view of a gripping device 308 of a robotic container-handling vehicle 122 at different stages of engaging with a bin support 502 suitable for use in the grid 100.

The embodiments illustrated in Figs. 10 and 11 relate to the use of a hook device 1002, also referred to as a hook, movably attached to, or coupled to, the gripping device 308. The hook device 1002 is suitable for moving the bin support 502 between the withdrawn position and the deployed position. The mechanism through which the hook device 1002 effects the movement of the bin support 502 will be described in detail with reference to Fig. 11.

The robot 122 may comprise means to actuate the hook device 1002. Said means may be mechanical, electronic, pneumatic or the like. The hook device 1002 may be moved laterally (e.g. in the x-y plane), e.g. towards and away from a bin support 502, and may be rotated or lifted (e.g. in the z-direction) (as illustrated in Fig. 11).

The bin support 502 may comprise a groove or indentation arranged to engage with the hook device 1002. Said groove or indentation is depicted in Fig. 11.

As the gripping device 308 is lowered or raised through column 102, the hook device 1002 may be kept in a retracted state to prevent unintentional interaction with a bin support 502, which may enable the gripping device 308 to pass through the column 102 unimpeded. The retracted state of the hook device 1002 may comprise the hook device pointing upwards, along a cable or band used to raise or lower the gripping device 308, as depicted in Fig. 10.

A scenario in which a bin support is moved from the deployed position to the withdrawn position will be described first. As shown in Fig. 10, gripping device 308 may be lowered into column 102 to retrieve storage bin 112. However, the path of the gripping device 308 may be impeded by the protrusion of the bin support 502b in the deployed position. In order to move the bin support 502b from the deployed position to the withdrawn position, the hook device 1002 may be rotated to engage with a groove or indentation in the deployed bin support 502b. Once the hook device 1002 is engaged with the groove or indentation in the bin support 502b, the hook device 1002 may be moved laterally, e.g. within the x-y plane, to push the bin support 502b into a withdrawn (e.g. retracted) position.

In a scenario in which a bin support 502 is moved from a withdrawn position to a deployed position, the hook device 1002 may be first moved laterally (e.g. in the x-y plane) towards the bin support 502 until the hook device 1002 is aligned with the groove of the bin support 502. Once the hook device 1002 is aligned with the groove of the bin support 502, the hook device 1002 may be rotated in order for the hook device 1002 to engage with the groove of the bin support 502. The hook device 1002 may then be retracted, pulling the bin support 502 in a direction away from the vertical frame member 104.

The position of the hook device 1002 may be a predetermined position. For example, in some embodiments, a bin support 502 may be in one of two positions - the deployed position or the withdrawn position - both of which corresponding to a defined position of a groove on the bin support 502. For example, the groove may be 2cm from the vertical frame member 104 when the bin support 502 is in the withdrawn position, but 5cm from the vertical frame member 104 when the bin support 502 is in the deployed position. A distance through which the hook device 1002 may be moved in order to engage with the groove of a bin support 502 may therefore be known.

Fig. 11 shows various stages in the actuation of the bin support 502 by hook device 1002. In Fig. 11 (i), the bin support 502 is displayed in the deployed position, protruding into the column 102. The hook device 1002 may be in a retracted position (e.g. a retracted lateral position), rotated to engage with groove 1102 of the bin support 502. In Fig. 11 (ii), the hook device 1002 may be moved laterally (e.g. within the x-y plane) while the hook device 1002 is engaged in the groove 1102 of the bin support 502, pushing the bin support 502 laterally towards the vertical frame member 104, thus moving the bin support 502 from the deployed position to the withdrawn position. In Fig. 11 (iii), the hook device 1002 may be disengaged from the groove 1102 of the bin support 502, for example by a rotational movement and/or by a lifting motion. As shown in Fig. 11 (iv), the hook device 1002 may then be retracted, e.g. returned, to the gripping device 308. As shown in Fig. 11 (iv), upon being retracted, the hook device 1002 may be arranged without protruding from the gripping device 308. In some embodiments, upon being retracted, the hook device 1002 may be positioned to align at least partially with a cable or band used to lift or lower the gripping device 308, as illustrated in Fig. 10.

The sequence illustrated in Fig. 11 (i) - (iv) shows the movement of bin support 502 from a deployed position to a withdrawn position. It is to be understood, however, that the reverse sequence may be followed to move the bin support 502 from a withdrawn position to a deployed position. For example, when moving the bin support 503 from the withdrawn position to the deployed position, the hook device 1002 may begin in a retracted state as illustrated in Fig. 11 (iv), and may be moved laterally (e.g. in the x-y plane) towards the bin support 502. As the hook device 1002 is moved toward the bin support 502, the hook device 1002 may be rotated and/or may be lifted in the z-direction to avoid colliding with the bin support 502 unintentionally. Once the hook device 1002 is aligned with the groove 1102 of the bin support 502, the hook device 1002 may be lowered and/or rotated to engage with the groove 1102 of the bin support 502, as illustrated in Fig. 11 (iii) - (ii). Once the hook device 1002 is engaged in the groove 1102 of the bin support 502, the hook device 1002 may be moved laterally towards the gripping device 308, pulling the bin support 502 into the deployed position. Once the bin support 502 has been pulled into the deployed position, the hook device 1002 may be lifted and/or rotated to disengage from the groove 1102 of the bin support 502.

Although Figs. 10 and 11 depict a single hook device 1002, it is to be understood that this is merely exemplary. The gripping device 308 may, for example, be provided with multiple hook devices 1002 arranged to engage with multiple bin supports 502 (e.g. positioned at each of a plurality of vertical frame members 104 forming a vertical column 102). For example, the gripping device 308 may be provided with four hook devices 1002, each arranged to engage with bin supports 502 disposed on each of four vertical frame members 104 forming the column 102.

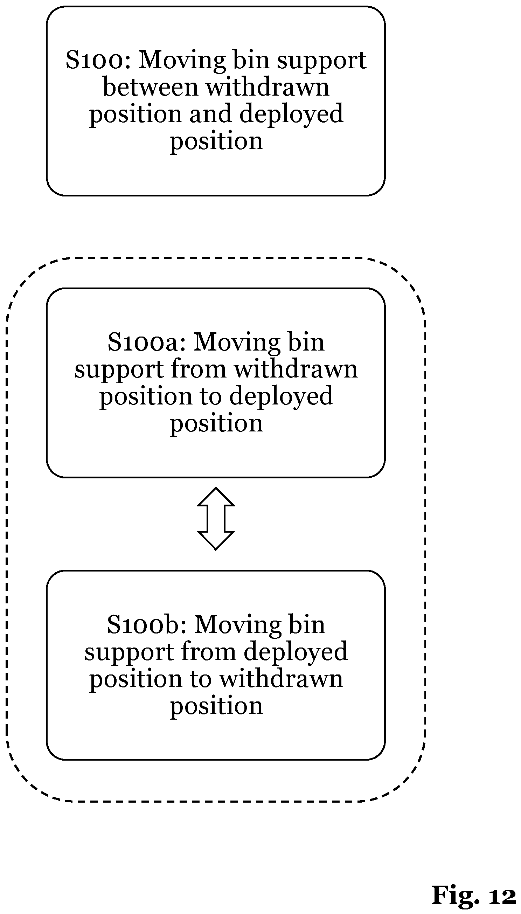

Fig. 12 shows a flowchart of a method S100 of moving a bin support 502 suitable for use in the grid 100.

Method S100 is a method of moving a bin support between a withdrawn position and a deployed position. Method S100 may comprise an operation S100a of moving a bin support 502 from a withdrawn position to a deployed position, and/or an operation Sioob of moving a bin support 502 from a deployed position to a withdrawn position. The method may comprise any of the operations or mechanisms described herein. That is, the method S100 may comprise moving the bin support 502 using any of the means described herein, such as: via an electronic mechanism, using a mechanical mechanism such as a spring mechanism as described with reference to Figs. 7a and 7b, a magnetic mechanism such as that described with reference to Figs. 9a and 9b, and/or using a hook device 1002 such as that described with reference to Figs. 10 and 11.

Instructions corresponding to the method S100 (e.g. S100a and/or S100b) may be, partially or completely, stored on a transitory or non-transitory computer readable medium.

The embodiments described herein may be combined. For example, a gripping device 308 may be arranged with one or more cut-out portions as well as a hook device 1002 and/or one or more magnets 902.

A bin support 502 may refer to one or more protrusions from a respective one or more vertical frame member 104. The one or more protrusions, or pins, may be vertically aligned. That is, a bin support may comprise a plurality of pins, ledges or protrusions, arranged to project into the column 102 when in the deployed position.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage grid having a support structure that defines a horizontal grid of columns, each column being arranged for the vertical storage of a plurality of storage bins, the storage grid having a bin support moveable between:
a deployed position wherein a storage bin can be lowered down one of the columns onto the bin support; and
a withdrawn position wherein a storage bin can be lowered down the column past the bin support.

2. The storage grid of claim 1, wherein the bin support is arranged to move from the withdrawn position to the deployed position consequent to a storage bin being lowered past the bin support.

3. The storage grid of claim 2, wherein the bin support is further arranged to move from the deployed position to the withdrawn position consequent to a storage bin being raised from below the bin support.

4. The storage grid of claim 2 or 3, wherein the bin support is arranged to move from the withdrawn position to the deployed position consequent to a storage bin being lowered past the bin support and onto a trigger mechanism,
optionally wherein a further bin support for supporting a storage bin below the bin support forms part of the trigger mechanism,
further optionally wherein the further bin support is moveable between: a further deployed position wherein a storage bin can be lowered down the column onto the further bin support; and a further withdrawn position wherein a storage bin can be lowered down the column past the further bin support.

5. The storage grid of claim 4, wherein the bin support is arranged to move from the deployed position to the withdrawn position consequent to the storage bin being raised off the trigger mechanism.

6. The method of any of any of claims 2 to 5, wherein the bin support is arranged to move between the withdrawn and deployed positions using energy derived from the storage bin being lowered.

7. The storage grid of claim 1, wherein the bin support is arranged to move between the withdrawn and deployed positions upon mechanical interaction between the bin support and a robotic vehicle's gripping device that has been lowered down the column.

8. The storage grid of claim 1 or 7, wherein the bin support is arranged to move between the withdrawn and deployed positions upon magnetic interaction between the bin support and a robotic vehicle's gripping device that has been lowered down the column, optionally wherein the bin support comprises a permanent magnet for interacting with an electromagnet of the gripping device.

9. The storage grid of any preceding claim, wherein the bin support is arranged to receive electrical, optical and/or radio instructions and to move between the withdrawn and deployed positions upon receipt thereof.

10. The storage grid of any preceding claim, wherein the bin support comprises a plurality of pins arranged to project into the column when in the deployed position.

11. A robotic vehicle comprising a body and a gripping device,
the robotic vehicle being arranged to ride upon a grid of rails of the storage grid of any preceding claim and to raise and lower the gripping device relative to the body,
the gripping device being arranged to releasably grip a storage bin and having one or more cut out portions to enable the gripping device to be lowered down the column past the bin support when the bin support is in the deployed position.

12. A robotic vehicle comprising a body and a gripping device,
the robotic vehicle being arranged to ride upon a grid of rails of a storage grid and to raise and lower the gripping device relative to the body,
the gripping device being arranged to releasably grip a storage bin and to cause a bin support of the storage grid to move between deployed and withdrawn positions.

13. The robotic vehicle of claim 12, the gripping device further comprising at least one of:
one or more electromagnets for causing the bin support to move between the deployed and withdrawn positions; and
one or more hooks arranged to cause the bin support to move between the deployed and withdrawn positions.

14. A method of operating the storage grid of any of claims 1 to 10 and/or the robotic vehicle of claim 12 or 13, the method comprising moving the bin support between the withdrawn and deployed positions.

15. A computer readable medium storing instructions for implementing the method of claim 14.
